(19) Europäisches Patentamt
European Patent Office
Office européen des brevets

(11) **EP 1 725 757 B1**

(12) **EUROPÄISCHE PATENTSCHRIFT**

(45) Veröffentlichungstag und Bekanntmachung des Hinweises auf die Patenterteilung:
**20.08.2008 Patentblatt 2008/34**

(51) Int Cl.:
*F02D 41/00* (2006.01)   *F01L 1/34* (2006.01)

(21) Anmeldenummer: 05715639.0

(22) Anmeldetag: **01.03.2005**

(86) Internationale Anmeldenummer:
**PCT/EP2005/002153**

(87) Internationale Veröffentlichungsnummer:
**WO 2005/085618 (15.09.2005 Gazette 2005/37)**

(54) **VERFAHREN UND VORRICHTUNG ZUM STEUERN DES LUFTMENGENSTROMES VON VERBRENNUNGSKRAFTMASCHINEN**

METHOD AND DEVICE FOR CONTROLLING THE AIR FLOW QUANTITY OF INTERNAL COMBUSTION ENGINES

PROCEDE ET DISPOSITIF POUR COMMANDER LE FLUX D'AIR DES MOTEURS A COMBUSTION INTERNE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **04.03.2004 DE 102004010519**

(43) Veröffentlichungstag der Anmeldung:
**29.11.2006 Patentblatt 2006/48**

(73) Patentinhaber: **Mehnert, Jens**
**08468 Heinsdorfergrund (DE)**

(72) Erfinder: **Mehnert, Jens**
**08468 Heinsdorfergrund (DE)**

(74) Vertreter: **Horn, Klaus**
**Patentanwaltskanzlei Dr. Horn,**
**Draisdorfer Strasse 69**
**09114 Chemnitz (DE)**

(56) Entgegenhaltungen:
**EP-A- 1 134 398       EP-A- 1 323 915**
**EP-A- 1 333 158       US-B1- 6 390 056**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Steuern des Luftmengenstromes von Verbrennungskraftmaschinen mit Direkteinspritzung, nach dem Oberbegriff des Patentanspruchs 1 sowie eine Vorrichtung zum Durchführen des Verfahrens nach dem Oberbegriff des Anspruchs 18.

Der Entwicklungsstand und die anzutreffenden Ausführungen von Verbrennungskraftmaschinen mit Direkteinspritzung, insbesondere nach dem Oberbegriff des Patentanspruchs 1, sind dadurch gekennzeichnet, dass die Steuerung der im Verdichtungstakt zu komprimierenden Luftmenge entweder durch eine Absenkung des Ausgangsdruckes während des Ansaugtaktes (Ausführungsart I) oder durch frühzeitiges Schließen des Einlassventils/der Einlassventile entsprechend dem gewünschten Lastbereich, ebenfalls während des Ansaugtaktes (Ausführungsart II), erfolgen.

Bei der Ausführungsart I wird die Absenkung des Ausgangsdruckes im Kompressionsraum zu Beginn jedes Verdichtungstaktes durch die Drosselung des der Verbrennungskraftmaschine zugeführten Luftmengenstromes vor dem Einlassventil/den Einlassventilen bei erreicht. Ausführungsbeispiele für eine derartige Steuerung des der Verbrennungskraftmaschine zugeführten Luftmengenstromes sind Drosselklappen, Schieberegler oder Steuerschieber (vgl. DE 3720097 A1; DE 19734227 C2, DE 69704595 T2, DE 19502669 C2, DE 19928523 A1, DE 19501150 C2 oder DE 10058200 A1). Die Ermittlung des aktuellen Lastzustandes der Verbrennungskraftmaschine erfolgt dabei entweder durch Messen des der Verbrennungskraftmaschine zugeführten Luftmengenstromes oder durch Ermittlung des Unterdruckes des der Verbrennungskraftmaschine zugeführten Luftmengenstromes nach dem jeweils eingesetzten Drosselelement. Auf Grund der Ausführungsart dieser Steuerung des der Verbrennungskraftmaschine zugeführten Luftmengenstromes treten Drosselverluste (vgl. Pöhls, Axel; Untersuchung eines Verfahrens zur gesteuerten Abgasrückführung bei Ottomotoren; VDI Verlag GmbH Düsseldorf; Dissertation 2001; ISBN 3-18-345812-8; S. 1; oder Homburg, Arno; Optische Untersuchungen zur Strahlausbreitung und Gemischbildung bei DI-Benzin-Brennverfahren; Fakultät für Maschinenbau und Elektrotechnik der TU Braunschweig; Dissertation 2002; S. 12) im Ergebnis der erforderlichen Druckabsenkung zur Lastregelung während des Ansaugtaktes für jeden Zylinder auf, welche speziell im Teillastbereich der Verbrennungskraftmaschine zu Wirkungsgradeinbußen führen (vgl. Weirich, Marko; NOx-Reduzierung mit Hilfe des SCR-Verfahrens am Ottomotor mit Direkteinspritzung; Universität Kaiserslautern, Fachbereich Maschinenbau und Verfahrenstechnik; Dissertation 2001; S. 3). Ausführungsbeispiele der Ausführungsart II in Bezug auf eine drosselfreie Steuerung des der Verbrennungskraftmaschine je Arbeitsspiel zugeführten Luftmengenstromes werden in den Patentschriften DE 19810466 C2; DE 10111991 A1; DE 4341945 A1; DE 19706750 A1, DE 69720356 T2 oder DE 3940752 A1 beschrieben, wobei der jeweils zugeführte Luftmengenstrom durch Variation der Öffnungsdauer des (der) Einlassventils(e) gesteuert wird.

Der Erfindung liegt die Aufgabe zugrunde, ein Verfahren zum Steuern des Luftmengenstromes von Verbrennungskraftmaschinen mit Direkteinspritzung anzugeben, welches einerseits keine Drosselverluste, speziell im Teillastbereich, hervorruft, wobei als Benchmark die Ausführungsart I gilt. Andererseits besteht im Unterschied zur im Stand der Technik beschriebenen Ausführungsart II der Anspruch, mit geringem baulichem Aufwand die Steuerung des der Verbrennungskraftmaschine zugeführten Luftmengenstromes zu gewährleisten, wobei der zugeführte Luftmengenstrom über alle Drehzahl- und Lastbereiche hinweg annähernd konstant bleiben soll. Dadurch verbessert sich das Ansprechverhalten bei Lastwechseln im instationären Betrieb der Verbrennungskraftmaschine, wobei sich der Steuerungsaufwand für dynamische Parameter, wie beispielsweise die jeweilige Abgasrückführungsrate oder die Menge des einzuspritzenden Kraftstoffs, verringert. Als Ergebnis wird angestrebt, einen quasi "stetigen" Ladungswechselprozess in Bezug auf die während eines Arbeitsspiels umzusetzenden Luftmengen zu erreichen, welcher besser erfasst und gesteuert werden kann, wodurch sich der Schadgasausstoß verringert und der Fahrkomfort steigt. Ebenfalls ist es Aufgabe der Erfindung, aufgrund des annähernd konstanten Luftmengenstromes eine verbesserte Abstimmung mit einem Abgasturbolader im Vergleich zum derzeitigen Stand der Technik zu ermöglichen und so die Effizienz der Verbrennungskraftmaschine zu steigern. Weiterhin ist es eine Aufgabe der Erfindung, eine Vorrichtung zum Durchführen des Verfahrens und eine Verbrennungskraftmaschine mit verbesserten Ansprechverhalten bei Lastwechseln bei geringerem Steuerungsaufwand anzugeben.

Diese Aufgaben werden mit einem Verfahren zum Steuern des Luftmengenstromes mit den Merkmalen des Anspruchs 1, einer Vorrichtung zum Durchführen des Verfahrens mit den Merkmalen des Anspruchs 18 und einer Verbrennungskraftmaschine mit den Merkmalen des Anspruchs 26 und/oder 27 gelöst. Vorteilhafte Ausführungsformen sind in den von den unabhängigen Ansprüchen jeweils abhängigen Ansprüchen gekennzeichnet. Im Folgenden wird die Erfindung beispielhaft näher erläutert.

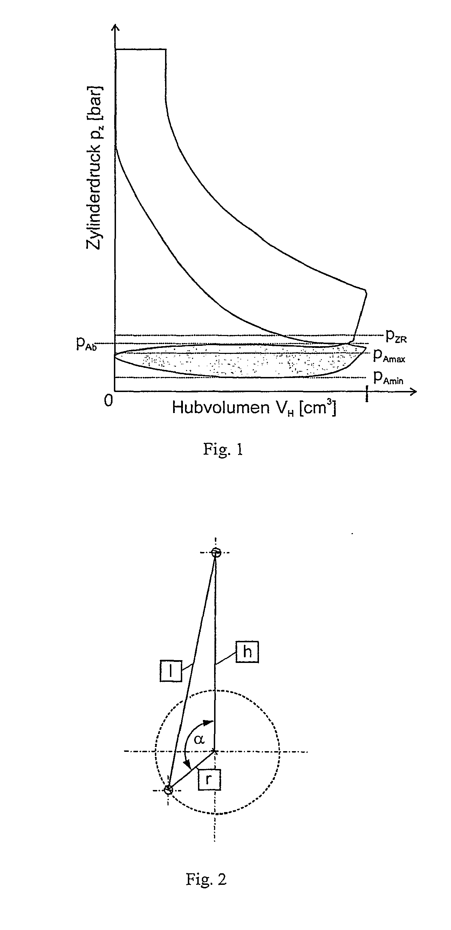

Die Grundlage für die Erfindung bildet der Seiligerprozess nach Fig. 1, speziell der im Rahmen des p-V-Diagramms grau dargestellte Niederdruckbereich während des Ansaugtaktes (relevant bezüglich Ausführungsart I und II) sowie der Druckanstiegsbereich als Folge der Volumenreduktion während des Verdichtungstaktes (relevant bezüglich Erfindungsdarstellung). Im Gegensatz zu den existierenden Steuerungsmechanismen des der Verbrennungskraftmaschine zugeführten Luftmengenstromes, erfolgt im Rahmen der Erfindung keine derartige Steuerung des Zylinderdruckes $p_z$ durch Drosselung (Ausführungsart I des Standes der Technik) oder frühzeitiges Schließen des/der Einlassventils(e) (Ausführungsart II des Standes der Technik) während des Ansaugtaktes zur Steuerung des der Verbrennungskraftmaschine zugeführten Luftmengenstromes je Arbeitsspiel entsprechend der einzustellenden Betriebspunkte zwischen Volllast und Teillast auf der Basis von Lastkollektiven. Lastkollektive sind in diesem Zusammenhang durch jeweils ein Fahrpedalsignal ($\gamma$), dessen Wert von der Fahrpedalstellung abhängt und ein Drehzahlsignal n, dessen Wert von der Drehzahl der Verbrennungskraftmaschine abhängt, definiert. Bei dem erfindungsgemäßen Verfahren wird die lastabhängige Steuerung des der Verbrennungskraftmaschine zugeführten Luftmengenstromes je Arbeitsspiel durch das Öffnen einer Gasaustrittsöffnung bei jedem Zylinder der Verbrennungskraftmaschine während des Verdichtungstaktes sichergestellt, wobei sich ein gleich bleibendes Druckniveau $p_{ZR}$ vom Öffnungs- bis zum Schließzeitpunkt der Gasaustrittsöffnung im Kompressionsraum jedes Zylinders der Verbrennungskraftmaschine einstellt. Die grau dargestellte Fläche im p-V-Diagramm (Ladungswechselschleife) in Fig. 1 zwischen den Zylinderdrücken $p_{Amin}$ und $p_{Amax}$ entfällt, da erfindungsgemäß über alle Lastbereiche (insbesondere bei Teillast) der Verbrennungskraftmaschine ausschließlich der Zylinderdruck $p_{Amax}$ vorliegt, weshalb für alle Lastkollektive $p_{Amin} = p_{Amax}$ gilt. Im Ergebnis der erfindungsgemäßen Steuerung des der Verbrennungskraftmaschine zugeführten Luftmengenstromes sinkt der Anteil der Ladungswechselarbeit im Niederdruckbereich des Seiligerprozesses entsprechend Fig. 1. Das Druckniveau des der Verbrennungskraftmaschine zugeführten Luftmengenstromes bleibt während des Ansaugtaktes auf Grund der Nichtdrosselung sowie des weitestgehend gleichbleibenden Öffnungsintervalls der/des Einlassventile (s) der Verbrennungskraftmaschine über alle Lastkollektive annähernd konstant beim Druck $p_{Amax}$. Gleiches gilt für den der Verbrennungskraftmaschine je Arbeitsspiel zugeführten Luftmengenstrom, da im Gegensatz zu den beschriebenen Ausführungsarten I und II erfindungsgemäß keine Begrenzung als Ergebnis einer Steuerung dieses Parameters während des Ansaugtaktes erfolgt.

Unter dem Begriff "Gasaustrittsöffnung im Kompressionsraum" ist eine Einrichtung zu verstehen, welche es ermöglicht, dass gasförmige Stoffe, z. B. ein Verbrennungsluftgemisch, aus dem Kompressionsraum eines Zylinders heraus, z. B. in eine Abgasleitung geführt werden kann. Die Gasaustrittsöffnung weist Mittel auf, mit denen die Gasaustrittsöffnung ansteuerbar verschließbar ist. Diese Mittel sind beispielsweise Ventileinrichtungen die über einen Aktuator oder eine Stelleinrichtung betreibbar sind. Gemäß einer besonderen Ausführungsform kann die Gasaustrittsöffnung im Sinne der Erfindung der Auslasskanal eines Zylinders sein, der durch ein variabel ansteuerbares Auslassventil verschlossen ist.

Gemäß einer weiteren Ausführungsform kann die Gasaustrittsöffnung gemäß der Erfindung ein weiterer Gasaustrittskanal neben dem Auslasskanal des Zylinders sein, der durch Ventileinrichtungen ansteuerbar verschließbar ist und definiert geöffnet und geschlossen werden kann. Die Formulierung "Gasaustrittsöffnung im Kompressionsraum" bedeutet auch, dass die Gasaustrittsöffnung im Sinne der Erfindung in den Kompressionsraum mündet.

Der Zeitpunkt zur Öffnung der Gasaustrittsöffnung im Kompressionsraum jedes Zylinders der Verbrennungskraftmaschine $\alpha_{HLiGÖ}$ ist vom Schließzeitpunkt des/der vorhandenen Einlassventils (e) (ES) sowie des anliegenden Abgasgegendruckes $p_{Ab}$ am Auslassventil (an den Auslassventilen) abhängig. Dabei gilt prinzipiell, dass erstens das (die) Einlassventil(e) geschlossen sein muss (müssen). Der Zeitpunkt ES ergibt sich aus dem Steuerdiagramm der jeweils betrachteten Verbrennungskraftmaschine entsprechend des Kurbelwinkels $\alpha_{HLiS}$ bei ES. Zweitens ist das Druckniveau $p_{ZR}$ so zu wählen, dass es geringfügig über dem des Abgasgegendruckes $p_{Ab}$ am Auslassventil (an den Auslassventilen) zum Zeitpunkt der Öffnung der Gassaustrittsöffnung im Kompres-sionsraum der Verbrennungskraftmaschine liegt, wobei in diesem Fall keine interne Abgasrückführung angestrebt wird. Durch das Druckgefälle $p_{ZR} > p_{Ab}$ mit

$$p_{ZR} \approx 1{,}02 \cdot p_{Ab} \quad \text{Gleichung 1}$$

wird einem eventuell möglichen Einströmen von Abgasen in den Kompressionsraum während des Verdichtungstaktes im Rahmen der Steuerung des der Verbrennungskraftmaschine zugeführten Luftmengenstromes durch Öffnen der Gasaustrittsöffnung im Kompressionsraum jedes Zylinders der Verbrennungskraftmaschine, welche an die Abgasleitung der Verbrennungskraftmaschine nahe dem Auslassventil (den Auslassventilen) angeschlossen ist, entgegengewirkt (Gleichung 1).

Wird eine interne Abgasrückführung angestrebt, so ist der Zeitpunkt der Öffnung der Gassaustrittsöffnung im Kompressionsraum der Verbrennungskraftmaschine so zu wählen, dass ein Druckgefälle eintritt, bei welchem $p_{ZR} < p_{Ab}$ gilt. Der Zeitpunkt zum Öffnen der Gasaustrittsöffnung im Kompressionsraum jedes Zylinders der Verbrennungskraftmaschine ist in diesem Zusammenhang entsprechend den existierenden Druckverhältnissen früher, dass heißt bezogen auf den Verdichtungstakt näher am unteren Totpunkt, zu wählen. Dabei richtet sich der Zeitpunkt zum Öffnen der Gasaustrittsöffnung im Kompressionsraum jedes Zylinders der Verbrennungskraftmaschine nach dem gewünschten Grad der intern zu realisierenden Abgasrückführrate und ist mit Hilfe von Indiziermessungen verbrennungskraftmaschinenspezifisch zu bestimmen, indem das jeweils einzustellende Druckgefälle ($p_{ZR} : p_{Ab}$) lastkollektivabhängig als Funktion des Kurbelwinkels $\alpha_{HLiGÖ}$ definiert wird.

Die Öffnungsdauer und somit der Schließzeitpunkt $\alpha_{HLiGS}$ der Gasaustrittsöffnung im Kompressionsraum jedes Zylinders der Verbrennungskraftmaschine $t_{Li}$ ist, in Äquivalenz zur Stellung des Drosselelementes oder der Öffnungsdauer der Einlassventile bei Ausführungsarten gemäß dem Stand der Technik (vgl. I oder II) des der Verbrennungskraftmaschine zugeführten Luftmengenstromes, vom jeweiligen gewünschten Lastbereich $p_{mSoll}$ der Verbrennungskraftmaschine abhängig, welcher durch Lastkollektive charakterisiert wird. Für die Auslegung von $t_{Li}$ gilt es zu beachten, dass sich $t_{Li}$ umgekehrt proportional zu $p_{mSoll}$ verhält, weshalb für die beiden Lastextrema der Verbrennungskraftma-schine gilt:

$$p_{mSoll,V} \longrightarrow Max...t_{li} = 0 \quad \textbf{Gleichung 2}$$

$$p_{mSoll,L} \longrightarrow 0...t_{li} = Max \quad \textbf{Gleichung 3}$$

Volllast (maximaler Mitteldruck $p_{mSoll,V}$ Gleichung 2) sowie Teillast Leerlauf (minimaler Mitteldruck $p_{mSoll,L}$ Gleichung 3).

Entsprechend diesen formulierten Abhängigkeiten bezüglich der Öffnungsdauer $t_{Li}$ der Gasaustrittsöffnung im Kompressionsraum jedes Zylinders der Verbrennungskraftmaschine kann durch Indiziermessungen an der jeweiligen Verbrennungskraftmaschine in Abhängigkeit von Lastkollektiven der Druck $p_{ZR}$ im Kompressionsraum der Verbrennungskraftmaschine ermittelt und in Abhängigkeit vom Kurbelwinkel $\alpha$ dargestellt werden. Die Steuerung des der Verbrennungskraftmaschine zugeführten Luftmengenstromes erfolgt bei diesen Indiziermessungen zum Zweck der Ausgangsdatenerfassung auf Basis der vorhandenen Steuerungsart entsprechend der jeweils vorhandenen Ausführungsart I oder II. Auf Grundlage dieser Indiziermessungen können lastkollektiv- und verbrennungskraftmaschinenspezifisch Zeitpunkte zum Schließen der Gasaustrittsöffnung im Kompressionsraum jedes Zylinders der Verbrennungskraftmaschine $t_{LiS}$ als Funktion des Kurbelwinkels $\alpha$ bestimmt werden. Dabei ergibt sich dieser Schließzeitpunkt $t_{LiS}$ aus dem Schnittpunkt von $p_{ZR}$ mit dem entsprechend indizierten Zylinderdruck $p_{ZI}$ während des Verdichtungstaktes. Dies erfolgt, indem im p-V-Diagramm der lastkollektivspezifisch indizierte Druckverlauf entsprechend Fig. 1 dargestellt und anschließend der parallel zur Ordinatensachse (Zylinderdruck) gemessene Abstand des Schnittpunktes $p_{ZR}$ : $p_{ZI}$ zur Abszissenachse (Hubvolumen) bestimmt wird. Somit kann das lastkollektivspezifische Hubvolumen $V_{HLi}$ ermittelt werden, bei welchem $p_{ZR} = p_{ZI}$ gilt. Aus dem in dieser Art ermittelten lastkollektivspezifischen Hubvolumen $V_{HLi}$ läßt sich der Zeitpunkt zum Schließen $t_{Lis}$ der Gasaustrittsöffnung im Kompressionsraum jedes Zylinders der Verbrennungskraftmaschine berechnen. Dazu ist es jedoch zuvor notwendig, die jeweiligen Kurbelwinkel zum Öffnen und Schließen der Gasaustrittsöffnung im Kompressionsraum jedes Zylinders der Verbrennungskraftmaschine zu bestimmen. Da der lastkollektivspe-zifische Öffnungszeitpunkt $\alpha_{HLIGÖ}$ entsprechend den vorangegangenen Ausführungen aus dem Steuerdiagramm der jeweils betrachteten Verbrennungskraftmaschine bestimmt werden kann, wird nachfolgend die Berechnung des Schließzeitpunktes $\alpha_{HLiGS}$ beschrieben. Zur Umrechnung des lastkollektivspezifischen Hubvolumens $V_{HLi}$ in Grad Kur-belwinkel $\alpha_{HLiGS}$ bezogen auf den Schließzeitpunkt der Gasaustrittsöffnung im Kompressionsraum jedes Zylinders der Verbrennungskraftmaschine dient folgende Beziehung (Gleichung 4):

$$V_{HIi} = V_H + V_C \qquad \textbf{Gleichung 4}$$

mit

$$V_{HLi} = \frac{\pi}{4} \cdot D^2 \cdot H_{HLi} \qquad \textbf{Gleichung 5}$$

woraus folgt

$$H_{HLi} = \frac{(V_{HLi} - V_C) \cdot 4}{\pi \cdot D^2} \qquad \textbf{Gleichung 6}$$

mit

$$h_{HLi} = H_{HLi} - x \qquad \text{Gleichung 7}$$

wodurch der lastkollektivspezifische Kurbelwinkel $\alpha_{HLiS}$ zum Schließen der Gasaustrittsöffnung im Kompressionsraum jedes Zylinders der Verbrennungskraftmaschine in Abhängigkeit vom lastkollektivspezifischen Abstand des Mittelpunktes des oberen Pleuelauges $h_{HLi}$ wie folgt berechnet werden kann (Gleichung 8).

$$\cos \alpha_{HLiS} = \frac{r^2 + h_{HLi}^2 - l^2}{2 \cdot r \cdot h_{HLi}} \qquad \text{Gleichung 8}$$

Daraus folgt, dass aus dem ermittelten lastkollektivabhängigen Hubvolumen $V_{HLi}$ eindeutig der dazugehörige Kurbelwinkel $\alpha_{HLiS}$ berechenbar ist, welcher den Kurbelwinkel zum Zeitpunkt des Schließens der Gasaustrittsöffnung im Kompressionsraum jedes Zylinders der Verbrennungskraftmaschine definiert. In der Folge kann die lastkollektivabhängige Öffnungsdauer $t_{HLi}$ der Gasaustrittsöffnung im Kompressionsraum jedes Zylinders der Verbrennungskraftmaschine berechnet werden. Dazu wird zuerst der entsprechende lastkollektivabhängige Kurbelwinkelbereich $\alpha_{HLi}$ bei welchem die Gasaustrittsöffnung im Kompressionsraum jedes Zylinders der Verbrennungskraftmaschine geöffnet ist. Dies erfolgt durch Subtraktion der jeweiligen lastkollektivspezifischen Kurbelwinkel bezüglich des Öffnens- und Schließens der Gasaustrittsöffnung im Kompressionsraum jedes Zylinders der Verbrennungskraftmaschine (Gleichung 9).

$$\alpha_{HLi} = \alpha_{HLi\ddot{O}} - \alpha_{HLiS} \qquad \text{Gleichung 9}$$

Auf Basis dieses Zwischenergebnisses (Gleichung 9) kann die Öffnungsdauer $t_{HLi}$ der Gasaustrittsöffnung im Kompressionsraum jedes Zylinders der Verbrennungskraftmaschine wie folgt berechnet werden (Gleichung 10).

$$t_{HLi} = \frac{\alpha_{HLi}}{2 \cdot \pi \cdot n_{HLi}} \qquad \text{Gleichung 10}$$

Damit speziell im unteren Teillastbereich der Verbrennungskraftmaschine (vgl. Gleichung 2) noch ausreichend Zeit zum Einspritzen des Kraftstoffes in den Verbrennungsraum am Ende des Verdichtungstaktes verbleibt, werden ab dem Erreichen kritischer Verhältnisse bezüglich des Kurbelwinkels bezogen auf das Schließen der Gasaustrittsöffnung im Kompressionsraum jedes Zylinders der Verbrennungskraftmaschine $\alpha_{HLiS}$ in Relation zum Einspritzbeginn $t_{EHLi}$, einzelne Zylinder abgeschalten. Diese Abschaltung erfolgt lastkollektiv- und zylinderspezifisch durch Reduktion der Einspritzmengen $\sim t_i$ auf null, bis zum Extremfall, der Befeuerung lediglich eines einzelnen Zylinders der Verbrennungskraftmaschine. In der Folge erhöht sich der Lastbereich der (oder des) weiter befeuerten Zylinder(s) der Verbrennungskraftmaschine, wodurch sich der Zeitpunkt zum Schließen der Gasaustrittsöffnung im Kompressionsraum der befeuerten Zylinder der Verbrennungskraftmaschine $\alpha_{HLiS}$ in Richtung unterer Totpunkt verschiebt. Dabei kann die Schleppleistung der unbefeuerten Zylinder $P_{mS}$ durch Variation der lastkollektivabhängigen Öffnungsdauern der jeweiligen Gasaustrittsöffnungen im Kompressionsraum dieser Zylinder der Verbrennungskraftmaschine in Abhängigkeit der verbrennungskraftmaschinenspezifischen Gegebenheiten eingestellt, dass heißt erhöht (Gleichung 11)

$$P_{mS} \uparrow \ldots t_{Li} \downarrow \qquad \text{Gleichung 11}$$

oder verringert (Gleichung 12) werden.

$$P_{mS} \downarrow \ldots t_{Li} \uparrow \qquad \text{Gleichung 12}$$

Damit ist eine gesteuerte Anhebung des Lastzustandes des/der befeuerten Zylinder der Verbrennungskraftmaschine möglich. Im Ergebnis dieser Steuerung wird einem eventuell denkbaren Austritt von eingespritztem Kraftstoff als Folge eines vor dem Schließzeitpunkt der Gasaustrittsöffnung im Kompressionsraum jedes Zylinders der Verbrennungskraftmaschine $\alpha_{HLiS}$ liegenden Einspritzbeginns $t_{EHLi}$ entgegengewirkt, ohne dass sich der der Verbrennungskraftmaschine zugeführte Luftmengenstrom relevant ändert.

Bei dem erfindungsgemäßen Verfahren können die der Verbrennungskraftmaschine je Zylinder und Arbeitsspiel zugeführten Luft- und Kraftstoffmengen gemeinsam auf der Grundlage von Lastkollektiven bestimmt werden, wodurch zahlreiche Steuerungsvorgänge vorteilhafter zu einem Lastkollektivoptimum zu modifizieren sind, wobei sich der Wert der jeweils zu steuernden Parameter in Richtung auf den lastkollektivspezifischen Wert hin bewegt. Dadurch stellen sich Vorteile bezüglich eines echtzeitnahen Modifizierens z. B. zur Leerlaufregelung, Klopfregelung, Antriebsschlupfregelung, Motorschleppmomentregelung, Fahrgeschwindigkeitsregelung bzw. Drehzahl- und Geschwindigkeitsbegrenzung oder zum Erzielen weicher Übergänge bei Gangwechseln bei automatischen oder semiautomatischen Schaltungen ein.

Die Erfindung wird durch folgende Abbildungen (Fig.) beispielhaft veranschaulicht. Diese zeigen:

Fig. 1:    Schematisierte Darstellung des Seiligerprozesses;
Fig. 2:    Schematisierte Darstellung des Kurbeltriebes einer Verbrennungskraftmaschine;
Fig. 3:    Schematisierte Blockschaltbilddarstellung einer Steuerungseinrichtung zum Veranschaulichen des erfindungsgemäßen Verfahrens zum Steuern des Luftmengenstromes von Verbrennungskraftmaschine.

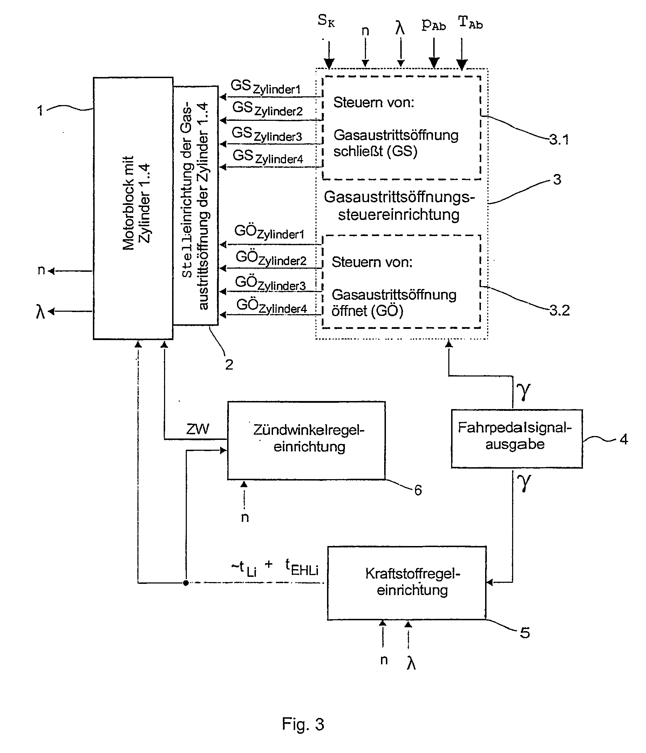

Beim Betrieb der in Fig. 3 in Form einer Blockschaltbilddarstellung abgebildeten Verbrennungskraftmaschine 1 werden die zugeführten Luft- und Kraftstoffmengen sowie die Zündzeitpunkte lastkollektivabhängig und zylinderspezifisch eingestellt. Im Unterschied zu den beschriebenen Ausführungsarten I und II ist sowohl die Steuerungseinrichtung 3 als auch die Steuerungsausführung in Bezug auf die lastkollektivabhängige Einstellung der den Zylindern der Verbrennungskraftmaschine je Arbeitsspiel jeweils zugeführten Luftmenge erfindungsgemäß ausgeführt. Somit erfolgt die Steuerung des der Verbrennungskraftmaschine je Arbeitsspiel und Zylinder zugeführten Luftmengenstromes mit Hilfe einer Gasaustrittsöffnung im Kompressionsraum jedes Zylinders der Verbrennungskraftmaschine, wobei eine bevorzugte Ausführungsart zur Gestaltung dieser Gasaustrittsöffnung im Kompressionsraum jedes Zylinders der Verbrennungskraftmaschine eine auslassventilintegrierende Bauweise mit individuell ansteuerbaren Auslassventilen 2 ist. Statt der bei jedem Ansaugtakt je Zylinder zu steuernden zugeführten Luftmenge erfolgt diese Steuerung erfindungsgemäß durch Variation der Öffnungsdauer der Gasaustrittsöffnung im Kompressionsraum jedes Zylinders der Verbrennungskraftmaschine während des Verdichtungstaktes. Dies wird mit einer Gasaustrittöffnungs-Steuereinrichtung 3 gesteuert, welche beim dargestellten Ausführungsbeispiel (Fig. 3) in eine GÖ (GasaustrittsöffnungsÖffnungs-) Steuereinrichtung 3.2 und eine GS (Gasaustrittsöffnungs-Schließ-) Steuereinrichtung 3.1 unterteilt ist. Erstere gibt zylinderspezifisch Signale GÖ an eine Betätigungseinrichtung der Gasaustrittsöffnung je Zylinder 2, während letztere zylinderspezifische Signale GS an diese Einrichtung ausgibt. Der Zeitpunkt GÖ wird zylinder- und verbrennungskraftmaschinenspezifisch entsprechend den vorangegangenen Ausführungen unter Beachtung des Zeitpunktes zum Schließen des/ der Einlassventils (e) bestimmt. Der Zeitpunkt GS wird lastkollektivabhängig bestimmt, wobei eine Fahrpedalsignalausgabe 4 das Fahrpedalsignal ($\gamma$) und ein in Fig. 3 nicht dargestellter Verbrennungskraftmaschinen-Drehzahlmesser das Drehsignal (n) liefert.

Bei Verbrennungskraftmaschinen der Ausführungsart I wird zur Lasterfassung oftmals das Signal eines Luftmassenmessers oder eines Saugrohrdruckmessers verwendet. Diese Messeinrichtungen sind mit dynamischen Fehlern behaftet, welche teils sensorbedingt (Klappen-Luftmengenmesser), oder auch messprinzipbedingt (Echt-Zeit-Charakter der Lastsignal-Auswertung - "Aktualisierungsfehler") sowie gestaltungsbedingt als Folge der Anordnung des Signalgebers im Saugrohr ("Phasenfehler") auftreten. Erfindungsgemäß können derartige Messeinrichtungen und Signalgeber entfallen. Die Tatsache, dass erfindungsgemäß der Saugrohrdruck im Mittel konstant ist, vereinfacht die Steuerung des der Verbrennungskraftmaschine zugeführten Luftmengenstromes, wobei im Unterschied zur beschriebenen Ausführungsart II auf den Einsatz von Schaltsaugrohren bzw. stufenlos verstellbaren Saugrohren zur dynamischen Kompensation von Druckwellen ebenso verzichtet werden kann, wie auf Luftaktivventile z. B. gemäß DE 19500501.5. Auf Grund des dadurch erzielten und annähernd konstanten Luftmengenstromes über alle Lastkollektive der Verbrennungskraftmaschine, können sehr genaue Voraussagen bezüglich der lastkollektivabhängigen Zylinderfüllung mit Luft getroffen werden, unter Beachtung der jeweils eingestellten Öffnungsdauer der Gasaustrittsöffnung im Kompressionsraum jedes Zylinders der Verbrennungskraftmaschine. Die Kraftstoff-Regeleinrichtung 5 nutzt ebenfalls Lastkollektive zur Steuergrößenmanipulation. In der Folge werden auf der Basis von Lastkollektiven sowohl die Kraftstoff-, wie auch die Luftmenge pro Arbeitsspiel und Zylinder gesteuert. Werden Differenzen zwischen den beiden Steuerungen mit Hilfe der Lambdaregelung festgestellt, erfolgt ein Eingriff auf diese Steuerungsparameter. Dabei kann entweder eine Veränderung bezüglich der Kraftstoffmenge ($\sim t_{Li}$), der Luftmenge oder beider Steuerungsparameter vorgenommen werden. Dies wird in Fig. 3 durch das Lambdasignal ($\lambda$) angedeutet, welches beiden genannten Steuerungseinrichtungen zugeführt wird. Das Regeln des Lambdawertes mit Hilfe der Steuereinrichtung zur Steuerung der Gasaustrittsöffnung im Kompressionsraum jedes Zylinders der Verbrennungskraftmaschine 3 besitzt den Vorteil, dass ein Echt-zeitnahes Ansprechen auf Änderungen des Lambdawertes umgesetzt werden kann. Die Regelung des Lambdawertes über die Steuerung des der Verbrennungskraftmaschine je Arbeitsspiel und Zylinder zugeführten Luftmengenstromes ist jedoch nur im Teillastbereich möglich, da diese Betriebspunkte noch nicht die Maximalfüllung repräsentieren. Die Regelung des Lambdawertes bei Volllast ($p_{mSoll,V}$) erfolgt durch die Manipulation der je Zylinder und Arbeitsspiel eingespritzten Kraftstoffmenge ($\sim t_{Li}$) bei geschlossener Gasaustrittsöffnung im Kompressionsraum jedes Zylinders der Verbrennungskraftmaschine (vgl. Gleichung 2).

Als Führungsgröße zur Reflexion des aktuellen Lastzustandes der Verbrennungskraftmaschine dient das Ausgangssignal der Kraftstoff-Regeleinrichtung 5, da dieses üblicherweise in vielfältiger Art korrigiert (z. B. Kraftstoff-, Verbrennungskraftmaschinen- oder Ansauglufttemperatur) sein kann. Darüber hinaus stellt die Einspritzmenge die entscheidende Größe für die Drehmomentabgabe der Verbrennungskraftmaschine und in der Folge somit auch für den dazugehörigen Zündwinkel (ZW) dar. Aus diesem Grund erhält eine Zündwinkel-Regeleinrichtung 6 das Signal zum Einspritzbeginn ($t_i$) und zur Einspritzmenge ($\sim t_{Li}$) als Lastsignal und liefert ein entsprechendes Zündwinkelsignal (ZW) für jeden Zylinder und jedes Arbeitsspiel der Verbrennungskraftmaschine.

Bei der beschriebenen Ausführungsvariante sind an der Verbrennungskraftmaschine zusätzlich Klopfsensoren (nicht in Fig. 3 dargestellt) vorhanden. Diese erfassen zylinderspezifisch das Klopfverhalten. Wird festgestellt, dass in einem Zylinder eine klopfende Verbrennung stattfindet, wird die Öffnungsdauer der Gasaustrittsöffnung in Kompressionsraum des Zylinders entsprechend verändert, damit sich das Klopfen legt. Im Resultat kann die bisher übliche und kraftstoffverbrauchserhöhende Zündwinkelverstellung zum Beseitigen von Klopfen entfallen.

Es wird darauf hingewiesen, dass das Blockschaltbild nach Fig. 3 lediglich zum veranschaulichen des vorstehend beschriebenen Verfahrens zum drosselverlustfreien Steuern des Luftmassenstromes von Verbrennungskraftmaschinen dient. Die in diesem Zusammenhang beschriebenen Verfahrensabläufe werden in der Praxis durch Mikroprozessoren realisiert und nicht durch Schaltungsblöcke, welche den Funktionsblöcken gemäß der Fig. 3 zugeordnet wären.

## **Bezugszeichenliste**

| Symbol | Bedeutung |
| --- | --- |
| $\sim t_{Li}$ | lastkollektivabhängige Kraftstoffeinspritzmenge |
| h | Kolbenweg |
| H | Hub des Kolbens |
| n | Drehzahlsignal entsprechend der Drehzahl der Verbrennungskraftmaschine |
| p | Druck |
| $p_{Ab}$ | Druck der Abgase am Auslaßventil |
| $p_{Amax}$ | oberstes Druckniveau in einem Zylinder der Verbrennungskraftmaschine zu Beginn des Verdichtungstaktes |
| $p_{Amin}$ | unterstes Druckniveau in einem Zylinder der Verbrennungskraftmaschine zu Beginn des Verdichtungstaktes |
| $P_{mS}$ | Zylinderspezifische Schleppleistung unbefeuerter Zylinder der Verbrennungskraftmaschine |
| $p_{mSoll}$ | gewünschter Lastbereich der Verbrennungskraftmaschine |
| $p_{mSoll,L}$ | minimal möglicher Lastbereich der Verbrennungskraftmaschine entsprechend dem Abnahmeprotokoll |
| $p_{mSoll,V}$ | maximal möglicher Lastbereich der Verbrennungskraftmaschine entsprechend dem Abnahmeprotokoll |
| $p_Z$ | Druck in einem Zylinder der Verbrennungskraftmaschine |
| $p_{ZI}$ | mit Hilfe von Indiziermessungen ermittelter lastkollektivabhängiger Druck in einem Zylinder der Verbrennungskraftmaschine in Abhängigkeit vom Kurbelwinkel |
| $P_{ZR}$ | eingestelltes Druckniveau in einem Zylinder der Verbrennungskraftmaschine während des Verdichtungstaktes |
| $t_{EHLi}$ | Lastkollektiv- und zylinderabhängiger Einspritzbeginn |
| $t_i$ | Lastkollektivabhängiger Einspritzbeginn je Zylinder |

| Symbol | Bedeutung |
|---|---|
| $t_{Li}$ | lastkollektivabhängige Öffnungsdauer der Gasaustrittsöffnung im Kompressionsraum jedes Zylinders der Verbrennungskraftmaschine in ms |
| $t_{LiS}$ | lastkollektivspezifische Schließzeitpunkt der Gasaustrittsöffnung im Kompressionsraum jedes Zylinders der Verbrennungskraftmaschine |
| V | Volumen |
| $V_C$ | Volumen des Kompressionsraumes eines Zylinders der Verbrennungskraftmaschine |
| $V_H$ | Hubvolumen eines Zylinders der Verbrennungskraftmaschine |
| $V_{HLi}$ | lastkollektivspezifisches Hubvolumen eines Zylinders der Verbrennungskraftmaschine |
| x | Maß zwischen Kolbenboden und dem Mittelpunkt des oberen Pleuelauges |
| $\alpha$ | Kurbelwinkel |
| $\alpha_{HLi}$ | lastkollektivspezifischer Kurbelwinkelbereich, bei welchem die Gasaustrittsöffnung im Kompressionsraum jedes Zylinders der Verbrennungskraftmaschine geöffnet ist in Grad Kurbelwinkel |
| $\alpha_{HLiGÖ}$ | Lastkollektivabhängiger Zeitpunkt zur Öffnung der Gasaustrittsöffnung im Kompressionsraum jedes Zylinders der Verbrennungskraftmaschine in Grad Kurbelwinkel |
| $\alpha_{HLiGS}$ | Lastkollektivabhängiger Zeitpunkt des Schließens der Gasaustrittsöffnung im Kompressionsraum jedes Zylinders der Verbrennungskraftmaschine in Grad Kurbelwinkel |
| $\alpha_{HLiÖ}$ | Lastkollektivabhängiger Kurbelwinkel zum Zeitpunkt EÖ |
| $\alpha_{HLiS}$ | Lastkollektivabhängiger Kurbelwinkel zum Zeitpunkt ES |
| $\gamma$ | gemessenes Fahrpedalsignal entsprechend der Fahrpedalstellung |
| $T_{Ab}$ | Abgastemperatur |
| $S_K$ | Signal eines Klopfsensors |

**Patentansprüche**

1.  Verfahren zum Steuern des Luftmengenstromes einer Verbrennungskraftmaschine mit direkter Kraftstoffeinspritzung und mindestens jeweils einem Einlass- und Auslassorgan je Zylinder mit Hilfe zumindest einer steuerbaren Gasaustrittöffnung je Zylinder, die mit dem Kompressionsraum des Zylinders der Verbrennungskraftmaschine in Verbindung steht, welches **dadurch gekennzeichnet ist, dass**

    - ein Fahrpedalsignal ($\gamma$) erfasst wird, dessen Wert von der Fahrpedalstellung abhängt,
    - ein Drehzahlsignal (n) erfasst wird, dessen Wert von der Drehzahl der Verbrennungskraftmaschine abhängt und aus ($\gamma$) und (n) Lastkollektive gebildet werden, wobei
    - sowohl eine lastkollektivabhängige Öffnungsdauer ($t_{Li}$) der Gasaustrittsöffnung im Kompressionsraum jedes Zylinders der Verbrennungskraftmaschine während des Verdichtungstaktes als auch lastkollektivabhängige Kraftstoffeinspritzmengen ($\sim t_{Li}$) je Arbeitsspiel und Zylinder bestimmt werden, sowie
    - Zündwinkel (ZW) lastkollektivabhängig bestimmt werden.

2.  Verfahren nach Anspruch 1, **dadurch gekennzeichnet, dass** die Zündwinkel (ZW) in Abhängigkeit vom Motordrehsignal (n) und einem Kraftstoffmengensignal ($\sim t_{Li}$) ermittelt werden.

3.  Verfahren nach Anspruch 1. oder 2., **dadurch gekennzeichnet, dass** für unterschiedliche Zylinder unterschiedliche Öffnungsdauern ($t_{Li}$) der jeweiligen Gasaustrittöffnung im Kompressionsraum in der Art bestimmt werden, dass alle befeuerten Zylinder annähernd die gleiche Menge an Arbeitsmedium (Kraftstoff-Luftgemisch) zugeführt bekommen.

4.  Verfahren nach einem der Ansprüche 1 bis 3, **dadurch gekennzeichnet, dass** für jeden Zylinder der Verbrennungskraftmaschine bei Vorliegen eines kritischen Teillastbereiches die entsprechende Gasaustrittsöffnung im Kompressionsraum nicht mehr geöffnet wird.

**5.** Verfahren nach einem der Ansprüche 1 bis 4, **dadurch gekennzeichnet, dass** bei Vorliegen eines Teillastsignals die Öffnungsdauern ($t_{Li}$) der Gasaustrittsöffnungen in den Kompressionsräumen von unbefeuerten Zylinder so verändert werden, dass in definierten Grenzen eine Laststeuerung für den befeuerten Zylinder durchgeführt werden kann.

**6.** Verfahren nach einem der Ansprüche 1 bis 5, **dadurch gekennzeichnet, dass** ein Öffnungsbeginn (GÖ) der Gasaustrittsöffnung im Kompressionsraum jedes Zylinders der Verbrennungskraftmaschine so gelegt wird, dass der Abgasgegendruck größer als der im Zylinder herrschende Druck ($p_Z$) ist, damit eine Abgasrückführung ermöglicht wird.

**7.** Verfahren nach einem der Ansprüche 1 bis 6, **dadurch gekennzeichnet, dass** zum Steuern von Betriebsgrößen der Verbrennungskraftmaschine, z. B. der Zündwinkel (ZW), die Einspritzmenge, der Einspritzzeitpunkt, der Schließzeitpunkt, der Gasaustrittsöffnung und/oder des Auslassventils das Fahrpedalsignal mittels eines Motorsteuergeräts so modifiziert wird, dass sich ein Istwert der jeweils zu steuernden Betriebsgröße in Richtung auf den jeweils gewünschten Sollwert der Betriebsgröße zu bewegt.

**8.** Verfahren nach einem der Ansprüche 1 bis 7, **dadurch gekennzeichnet, dass** das Klopfverhalten der Verbrennungskraftmaschine zylinderspezifisch überwacht wird und die Öffnungsdauern ($t_{Li}$) der Gasaustrittsöffnungen im Kompressionsraum jedes Zylinders der Verbrennungskraftmaschine so eingestellt werden, dass kein Klopfen auftritt.

**9.** Verfahren nach einem der Ansprüche 1 bis 8, **dadurch gekennzeichnet, dass** die Funktion der Gasaustrittsöffnung zur Einstellung der in jedem Zylinder befindlichen Luftmenge während des Verdichtungstaktes durch das oder die Auslassventil(e) übernommen wird.

**10.** Verfahren nach einem der Ansprüche 1 bis 9, **dadurch gekennzeichnet, dass** zur Steuerung der Motorlast im Teillastbereich die Befeuerung einzelner Zylinder unterbleibt und die Öffnungsdauer ($t_{Li}$) der Gasaustrittsöffnung gleich null ist.

**11.** Verfahren nach einem der Ansprüche 1 bis 10, **dadurch gekennzeichnet, dass** die Ermittlung der Luftmenge im Zylinder über die Erfassung des Abgasdruckes ($p_{Ab}$) nach der Gasaustrittsöffnung oder dem Auslassventil während des Verdichtungstaktes erfolgt.

**12.** Verfahren nach einem der Ansprüche 1 bis 11, **dadurch gekennzeichnet, dass** die Einstellung der Öffnungsdauer ($t_{Li}$) und/oder des Öffnungshubes der Gasaustrittöffnung oder des Auslassventils während des Verdichtungstaktes durch das Abgas-Drucksignal ($p_{Ab}$), sowie in Abhängigkeit von der Motordrehzahl (n) und der Fahrpedalstellung ($\gamma$), erfolgt.

**13.** Verfahren nach einem der Ansprüche 1 bis 12, **dadurch gekennzeichnet, dass** die Einstellung der Öffnungsdauer ($t_{Li}$) und/oder des Öffnungshubes der Gasaustrittöffnung oder des Auslassventils während des Verdichtungstaktes durch die Klopfgrenze der Verbrennungskraftmaschine in der Art bestimmt ist, dass bis zum Eintreten von Kraftstoffklopfen die Öffnungsdauer ($t_{Li}$) und/oder der Öffnungshub schrittweise erhöht wird und diejenige Öffnungsdauer ($t_{Li}$) und/oder der Öffnungshub als Maximalwert eingestellt wird, welche einen Schritt vor dem Kraftstoffklopfen ermittelt wurde.

**14.** Verfahren nach einem der Ansprüche 1 bis 13, **dadurch gekennzeichnet, dass** zur Steuerung einer gleich bleibenden Abgastemperatur ($T_{Ab}$) während eines Regenerationsprozesses eines im Abgaskanal befindlichen Ruß- und/oder Partikelfilters sowohl die Motorlast als auch die Abgastemperatur ($T_{Ab}$) in der Art erhöht werden können, dass durch Verlängerung der Öffnungsdauer ($t_{Li}$) und/oder des Öffnungshubes der Gasaustrittsöffnung oder des Auslassventils jedes Zylinders während des Ausstoßtaktes die Abgastemperatur ($T_{Ab}$) und die Motorlast steigt und bis zum Abschluss des Regenerationsprozesses die Öffnungsdauer ($t_{Li}$) und/oder der Öffnungshub in Abhängigkeit der Abgastemperatur ($T_{Ab}$) gesteuert wird.

**15.** Verfahren nach Anspruch 1 bis 14, **dadurch gekennzeichnet, dass** zur Steuerung des Luftmengenstromes der Verbrennungskraftmaschine die Steuersignale an Stelleinrichtungen für die Gasaustrittöffnungen und/oder die Auslassventile sowie an die Einspritzventile mittels einer als CAN-Datenbus oder bitseriellen Schnittstelle ausgeführten elektronischen Schnittstelle durch eine integrierte Steuereinheit des Motorsteuergerätes eingekoppelt werden.

**16.** Verfahren nach einem der Ansprüche 1 bis1 5, **dadurch gekennzeichnet, dass** Fehlfunktionen in der Steuerung des Luftmengenstromes mittels eines Diagnosefunktionsmoduls erfasst werden und die erfassten Fehlfunktionen in einer Datensicherung des Motorsteuergerätes auslesbar archiviert werden.

**17.** Verfahren nach einem der Ansprüche 1 bis 16, **dadurch gekennzeichnet, dass** zur Steuerung des Bremsmomentes der Verbrennungskraftmaschine im Schubbetrieb die Öffnungsdauer ($t_{Li}$) und/oder der Öffnungshub des oder der Auslassventile jedes Zylinders während des Ausstoßtaktes so gesteuert werden, dass eine bremsmomentabhängige Verdichtung der Verbrennungsgase durch Verringerung der Öffnungsdauer ($t_{Li}$) und/oder Verringerung des Ventilhubes eingestellt wird.

**18.** Vorrichtung zur Steuerung des Luftmengenstromes von Verbrennungskraftmaschinen mit einer zylinderselektiv und arbeitsspielindividuell steuerbaren Kraftstoffeinspritzung und zumindest einer Gasaustrittsöffnung oder zumindest einem vollvariabel ansteuerbaren Auslass-Steuerungsorganen,
**dadurch gekennzeichnet,**

    - **dass** ein Drehzahlsensor vorhanden ist, der die Kurbelwellendrehzahl (n) erfasst,
    - ein Drucksensor vorhanden ist, der den Druck nach der Gasaustrittsöffnung ($p_{Ab}$) und/oder nach den Auslassventilen jedes Zylinders erfasst und
    - ein Sensor vorhanden ist, der die Fahrpedalstellung (γ) erfasst,
    - wobei ein Motorsteuergerät vorhanden ist, an das die Parameter (n), (p) und (γ) übermittelt werden, welches eine integrierte Steuereinheit mit Algorithmen zur Bestimmung des Luftmengenstromes enthält und welches auf dieser Basis Steuersignale bereitstellt, die die Öffnungsdauer und/oder den Ventilhub der Gasaustrittsöffnung oder des oder der Auslassventile jedes Zylinders steuern.

**19.** Vorrichtung nach Anspruch 18, **dadurch gekennzeichnet, dass** Stelleinrichtungen für die Gasaustrittsöffnungen oder die Auslass-Steuerungsorgan vorhanden sind, wobei die Steuerung der Öffnungsdauer der Gasaustrittsöffnungen oder der Auslass-Steuerungsorgane der Zylinder durch eine Signalausgabe des Motorsteuergerätes an die Stelleinrichtungen für Gasaustrittsöffnungen oder die Auslass-Steuerungsorgane in Abhängigkeit eines Temperatursignals ($T_{Ab}$) eines Temperatursensors im Abgassystem in der Art erfolgen, dass ein Differenzwert zwischen Abgassoll- und Abgasist-Temperatur gebildet wird und in Abhängigkeit dieses Differenzwertes die Öffnungsdauer und/oder der Ventilhub jedes Auslassventils über Signale des Motorsteuergerätes zu den Stelleinrichtungen der Auslassventile so erfolgt, dass sich die eingestellte Öffnungsdauer und/oder der Ventilhub jedes Auslassventils nach dem ermittelten Temperaturdifferenzwert richtet und während des Regenerationsprozesses eines Ruß- oder Partikelfilters konstant auf eine Solltemperatur eingestellt wird.

**20.** Vorrichtung nach Anspruch 18 und/oder 19, **dadurch gekennzeichnet, dass** ein Klopfsensor vorhanden ist, wobei zur Einstellung des Verdichtungsverhältnisses der Verbrennungskraftmaschine das Motorsteuergerät Signale an die Stelleinrichtungen der Gasaustrittsöffnungen und/oder Auslass-Steuerungsorgane jedes Zylinders während des Verdichtungstaktes ausgibt und die Einstellung des Verdichtungsverhältnisses in Abhängigkeit eines Signals des Klopfsensors ($S_K$) durch das Motorsteuergerät erfolgt.

**21.** Vorrichtung nach Anspruch 18 bis 20, **dadurch gekennzeichnet, dass** das Motorsteuergerät eine integrierte Steuereinheit besitzt, die Schätzmittel zum Schätzen eines gewünschten Kraftstoff/Luft-Verhältnisses basierend auf den gegenwärtigen Motorbetriebsbedingungen enthält, welche durch die Sensoren ermittelt werden.

**22.** Vorrichtung nach Anspruch 21, **dadurch gekennzeichnet, dass** das Schätzmittel mit den Stelleinrichtungen und einer Kraftstoffeinrichtung verbunden ist und ein Steuersignal an die Stelleinrichtungen für die Gasaustrittsöffnungen oder die Auslass-Steuerungsorgane der Zylinder sowie die Kraftstoff-Steuereinrichtung leitet, um das Kraftstoff/Luft-Verhältnis so einzustellen, dass es gleich dem gewünschten Kraftstoff/Luft-Verhältnis ist, bevor die Druckmessungen durch einen Drucksensor im Abgassystem vorgenommen werden.

**23.** Vorrichtung nach Anspruch 22, **dadurch gekennzeichnet, dass** in der integrierten Steuereinheit kennfeldabhängige optimale Luftüberschussverhältnisse für verschiedene Motorbetriebsbedingungen gespeichert sind, wobei jedes der gespeicherten optimalen Luftüberschussverhältnisse einem spezifischen Satz von Motorbetriebsbedingungen entspricht.

**24.** Vorrichtung nach Anspruch 18, **dadurch gekennzeichnet, dass** die Gasaustrittöffnung das Auslassventil jedes Zylinders ist und die integrierte Steuereinheit in der Lage ist, die Öffnungs- und Schließzeiten und/oder die Öffnungswege der Auslassventile durch Stelleinrichtungen in der Art zu beeinflussen, dass sich die erforderlichen Luftmengenverhältnisse für eine betriebspunktspezifische Verbrennungssteuerung einstellen.

25. Vorrichtung nach Anspruch 18, **dadurch gekennzeichnet, dass** das Motorsteuergerät die Motorlast auf der Grundlage eines Messwertes eines Drehzahlsensors für die Kurbelwellendrehzahl (n) und eines Messwertes eines Drucksensors nach der Gasaustrittsöffnung und/oder des Auslassventils ($p_{Ab}$) jedes Zylinders ermittelt und/oder die Verbrennungsluftmenge über die Öffnungsdauer und/oder den Öffnungsweg der Auslassventile während des Verdichtungstaktes über Stelleinrichtungen einstellt.

26. Verbrennungskraftmaschine, die nach dem Verfahren nach einem der Ansprüche 1 bis 17 betrieben wird.

27. Verbrennungskraftmaschine aufweisend eine Vorrichtung nach einem der Ansprüche 18 bis 25.

**Claims**

1. Method for controlling the air flow quantity of internal combustion engines with direct fuel injection and at least one input or output organ each per cylinder with the aid of at least one controllable gas exhaust opening per cylinder that is in connection with the compression space of the cylinder of the combustion engine, that is **characterised by** the fact that

- a gas pedal signal ($\gamma$) is recorded whose value depends on the position of the gas pedal
- a speed signal (n) is recorded whose value depends on the speed of the combustion engine and is formed from ($\gamma$) and (n) load collectives, where
- both an open period dependent upon the load collective ($t_{li}$) is determined for the gas exhaust opening in the compression space of each cylinder of the combustion engine during the compression stroke and fuel injection quantities dependent upon the load collective ($\sim t_{li}$) are determined per operating cycle and cylinder, and
- advance angles (ZW) are determined dependent upon the load collective.

2. Method in accordance with claim 1 that is **characterised by** the fact that the advance angle (ZW) is calculated depending upon the motor speed signal (n) and a fuel quantity signal ($\sim t_{li}$).

3. Method in accordance with claim 1 or 2 **characterised by** the fact that different open periods ($t_{li}$) are determined for each of the gas exhaust openings in the compression space for different cylinders so that all cylinders fired are supplied approximately the same amount of working medium (i.e., the fuel-air mixture).

4. Method in accordance with one of the claims 1 through 3 **characterised by** the fact that the corresponding gas exhaust opening in the compression space is no longer open for each cylinder of the combustion engine if there is a critical partial-load range.

5. Method in accordance with one of the claims 1 through 4 **characterised by** the fact that the open periods ($t_{li}$) for the gas exhaust openings in the compression spaces are changed by unfired cylinders if there is a partial-load signal so that the load can be controlled for the fired cylinder in defined limits.

6. Method in accordance with one of the claims 1 through 5 **characterised by** the fact that an opening beginning is laid for the gas exhaust opening in the compression space of each cylinder in the combustion engine so that the exhaust gas counterpressure is greater than the pressure predominant in the cylinder ($p_z$) to allow the exhaust gas to be returned.

7. Method in accordance with one of the claims 1 through 6 **characterised by** the fact that the gas pedal signal is modified via motor control device to control the service variables for the combustion engine (such as the advance angle, injection quantity, injection time or closing time of the gas exhaust opening and/or the exhaust valve) so that an actual value for each of the service variables to be controlled is moved towards each of the desired target values of the service variable.

8. Method in accordance with one of the claims 1 through 7 **characterised by** the fact that the knocking properties of the combustion engine are monitored for each specific cylinder and the open periods ($t_{li}$) are set for the gas exhaust openings in the compression space of each cylinder of the combustion engine so there is no knocking.

9. Method in accordance with one of the claims 1 through 8 **characterised by** the fact that the function of the gas exhaust opening for adjusting the quantity of air in each cylinder is taken over the outlet valve(s) during the compression stroke.

10. Method in accordance with one of the claims 1 through 9 **characterised by** the fact that single cylinders are not fired and the open period ($t_{li}$) for the gas exhaust opening is equal to zero t control the partial-load range.

11. Method in accordance with one of the claims 1 through 10 **characterised by** the fact that the quantity of air in the cylinder is calculated by recording the exhaust pressure ($p_{ab}$) after the gas exhaust opening or the outlet valve during the compression stroke.

12. Method in accordance with one of the claims 1 through 11 **characterised by** the fact that the open period ($t_{li}$) and/or the opening stroke for the gas exhaust opening or outlet valve is adjusted by the exhaust pressure signal ($p_{ab}$) during the compression stroke and depending upon the motor speed ($n$) and the gas pedal position ($\gamma$).

13. Method in accordance with one of the claims 1 through 12 **characterised by** the fact that the adjustment of the open period ($t_{li}$) and/or the opening stroke of the gas exhaust opening or outlet valve during the compression stroke is determined by the knocking limit of the combustion engine so that the open period ($t_{li}$) and/or the opening stroke is gradually increased until fuel knocking occurs and the open period ($t_{li}$) and/or opening stroke is adjusted to maximum, which is ascertained one step before fuel knocking.

14. Method in accordance with one of the claims 1 through 13 **characterised by** the fact that both the motor load and the exhaust gas temperature ($T_{ab}$) can be increased to control an even exhaust gas temperature ($T_{ab}$) during a regeneration process of a soot and/or particle filter in the exhaust gas channel so that the exhaust gas temperature ($T_{ab}$) and motor load increase by extending the open period ($t_{li}$) and/or the opening stroke of the gas exhaust opening or the outlet valve of each cylinder during the ejection cycle and the open period ($t_{li}$) and/or the opening stroke is controlled depending upon the exhaust gas temperature ($T_{ab}$) to the completion of the regeneration process.

15. Method in accordance claims 1 through 14 **characterised by** the fact that the control signals are coupled to the adjustment devices for the gas exhaust openings and/or outlet valves and to the injection valves by means of an electronic interface designed as a CAN data bus or bit-serial interface through a built-in control unit of the motor control device.

16. Method in accordance with one of the claims 1 through 15 **characterised by** the fact that malfunctions in controlling the air quantity flow are recorded by a diagnostic function module and the malfunctions recorded are archived in a data backup for the motor control device.

17. Method in accordance with one of the claims 1 through 16 **characterised by** the fact that the open period ($t_{li}$) and/or the opening stroke of the outlet valve(s) of each cylinder during the ejection cycle is controlled for controlling the brake torque of the combustion engine in thrust operation so that the compression of the combustion gases depending upon brake torque is adjusted by reducing the open period ($t_{li}$) and/or reducing the valve stroke.

18. Device for controlling the air flow quantity of internal combustion engines with fuel injection that can be controlled for selective cylinders and individual working cycles and with at least one gas exhaust opening or at least one completely variable and drivable output control organ, **characterised by** the fact

   - that there is a speed sensor that records the crankshaft speed ($n$),
   - that there is a speed sensor that records the pressure after the gas exhaust opening ($P_{ab}$) and/or the outlet valves of each cylinder, and
   - that there is a sender that records the gas pedal position ($\gamma$),
   - where there is a motor control device that the parameters ($n$), ($p$) and ($\gamma$) are transmitted to that has a built-in control unit with algorithms for determining the air quantity flow and that provides control signals on this basis that control the open period and/or the valve stroke of the gas exhaust opening or the outlet valves of each cylinder.

19. Device in accordance with claim 18 **characterised by** the fact that there are adjustment devices for the gas exhaust openings or the outlet control organs where the open period of the gas exhaust openings or outlet control organs of the cylinders are controlled by signal output from the motor control device to the adjustment devices for the gas exhaust openings or the outlet control organs depending upon a temperature signal ($T_{ab}$) from a temperature sensor in the exhaust gas system so that it forms a differential between the targeted and actual exhaust gas temperature and the open period and/or the valve stroke of each outlet valve is made via signals from the motor control device to the adjustment devices of the outlet valves depending upon this differential so that the adjusted open period and/or valve stroke of each outlet valve is dictated by the calculated temperature differential and is constantly adjusted to a targeted temperature during the regeneration process of a soot or particle filter.

20. Device in accordance with claim 18 and/or 19 **characterised by** the fact that there is a knocking sensor where the motor control device transmits signals to the adjustment devices of the gas exhaust openings or the outlet control organs of each cylinder during the compression stroke to adjust the pressure ratio of the combustion engine, and the pressure ratio is adjusted depending upon a signal of the knocking sensor ($S_K$) by the motor control device.

21. Device in accordance with claims 18 through 20 **characterised by** the fact that the motor control device has a built-in control unit that contains means for assessing a desired fuel/air ratio based on the present motor operating conditions that are ascertained by the sensors.

22. Device in accordance with claim 21 **characterised by** the fact that the means of assessment is connected to the adjustment devices and a fuel unit and conducts a control signal to the adjustment devices for the gas exhaust openings or the outlet control organs of the cylinders and the fuel control unit for adjusting the fuel/air ratio so that it is equal to the desired fuel/air ratio before the pressure measurements are taken by a pressure sensor in the exhaust gas system.

23. Device in accordance with claim 22 **characterised by** the fact that optimum surplus air ratios depending upon performance characteristics are stored in the built-in control unit for various motor operating conditions where each of the stored optimum surplus air ratios corresponds to a specific set of motor operating conditions.

24. Device in accordance with claim 18 **characterised by** the fact that the gas exhaust opening is the outlet valve of each cylinder and the built-in control unit is capable of influencing the opening and closing times and/or the opening paths of the outlet valves with adjustment devices so that the needed air quantity ratios develop for combustion control for specific operating points.

25. Device in accordance with claim 18 **characterised by** the fact that the motor control device ascertains the motor load based on a reading from a speed sensor for the crankshaft speed (n) and a reading from a pressure sensor after the gas exhaust opening and/or outlet valve ($P_{ab}$) of each cylinder and/or adjusts the combustion air quantity by the open period and/or the opening path of the outlet valves during the compression stroke via adjustment devices.

26. A combustion engine operated in accordance with the process in accordance with one of the claims 1 through 17.

27. A combustion engine with a device in accordance with one of the claims 18 through 25.

**Revendications**

1. Procédé pour commander le flux d'air des moteurs à combustion interne et à injection de carburant directe dont chaque cylindre est muni d'au moins un organe d'admission et d'échappement et d'au moins un orifice d'échappement des gaz réglable qui lui est raccordé à la chambre de compression du cylindre du moteur à combustion interne, ce procédé étant **caractérisé par le fait**

- **qu'**il y est saisi un signal de pédale d'accélérateur (*y*) dont la valeur varie en fonction de la position de la pédale d'accélérateur,
- **qu'**il y est saisi un signal de vitesse de rotation (n) dont la valeur varie en fonction de la vitesse de rotation du moteur à combustion interne, et que les valeurs (*y*) et (n) forment des charges collectives, ce qui permet de
- déterminer, pendant le temps de compression et en fonction de ces charges collectives, tant une durée d'ouverture ($t_{Li}$) pour l'orifice d'échappement des gaz situé à l'intérieur de la chambre de compression de chaque cylindre du moteur à combustion interne, que des volumes de carburant injecté (~$t_{Li}$) pour chaque cycle opérationnel et chaque cylindre et des angles d'allumage (ZW).

2. Procédé selon la revendication 1, **caractérisé par le fait que** les angles d'allumage (ZW) sont déterminés en fonction du signal de vitesse de rotation du moteur (n) et d'un signal de volume de carburant (~$t_{Li}$).

3. Procédé selon la revendication 1 ou 2, **caractérisé par le fait que** des durées d'ouverture différentes ($t_{Li}$) sont déterminées pour les différents cylindres de chaque orifice d'échappement des gaz situés à l'intérieur de la chambre de compression, de telle façon que tous les cylindres chauffés soient alimentés de presque le même volume du milieu résonant (mélange d'air et de carburant).

4. Procédé selon l'une des revendications 1 à 3, **caractérisé par le fait qu'**au moment où des charges partielles atteignent un niveau critique, l'orifice d'échappement des gaz situé à l'intérieur de la chambre de compression ne s'ouvre plus, ceci sur chaque cylindre du moteur à combustion interne.

5. Procédé selon l'une des revendications 1 à 4, **caractérisé par le fait qu'**au moment où il se produit un signal avisant des charges partielles, les durées d'ouverture ($t_{Li}$) des orifices d'échappement des gaz situés dans les chambres de compression des cylindres non chauffés sont modifiées de telle sorte que, dans une plage limitée, les charges actionnant sur les cylindres chauffés puissent être réglées.

6. Procédé selon l'une des revendications 1 à 5, **caractérisé par le fait que** l'orifice d'échappement des gaz situé à l'intérieur de la chambre de compression de chaque cylindre du moteur à combustion interne s'ouvre au moment où la contre-pression des gaz d'échappement est supérieure à la pression ($p_z$) existant dans le cylindre, ce qui permet le retour des gaz d'échappement.

7. Procédé selon l'une des revendications 1 à 6, **caractérisé par le fait que**, pour permettre le réglage des paramètres du moteur à combustion interne, tels que l'angle d'allumage (ZW), le volume de carburant injecté, le point d'injection ou le point de fermeture de l'orifice d'échappement des gaz et/ou de la soupape d'échappement de la pédale d'accélérateur, peuvent être modifiés à l'aide d'un calculateur moteur, de telle sorte que la valeur réelle de chacun de ces paramètres à régler s'approche peu à peu de sa valeur de consigne.

8. Procédé selon l'une des revendications 1 à 7, **caractérisé par le fait que** le pouvoir détonant de chaque cylindre du moteur à combustion interne est surveillé, et que les durées d'ouverture ($t_{Li}$) des orifices d'échappement des gaz situés à l'intérieur de la chambre de compression de chaque cylindre du moteur à combustion interne sont réglées de telle sorte qu'il n'y aient pas de cliquetis.

9. Procédé selon l'une des revendications 1 à 8, **caractérisé par le fait que**, pendant le temps de compression, la fonction de l'orifice d'échappement des gaz nécessaire au réglage du débit d'air de chaque cylindre est assurée par la ou les soupape(s) d'échappement.

10. Procédé selon l'une des revendications 1 à 9, **caractérisé par le fait que**, pour permettre le réglage de la charge moteur dans la plage des charges partielles, certains cylindres ne sont pas chauffés, et que la durée d'ouverture ($t_{Li}$) de l'orifice d'échappement des gaz est égale à zéro.

11. Procédé selon l'une des revendications 1 à 10, **caractérisé par le fait que** le débit d'air dans le cylindre est déterminé par l'acquisition, pendant le temps de compression, de la pression des gaz d'échappement ($P_{Ab}$), cette pression étant saisie soit sur l'orifice d'échappement des gaz, soit sur la soupape d'échappement.

12. Procédé selon l'une des revendications 1 à 11, **caractérisé par le fait que**, pendant le temps de compression, le réglage de la durée d'ouverture ($t_{Li}$) et/ou de la levée d'ouverture de l'orifice d'échappement des gaz ou celle de la soupape d'échappement est effectué, en fonction de la vitesse de rotation du moteur (n) et de la position de la pédale d'accélérateur (*y*), par le signal de la pression d'échappement des gaz ($P_{Ab}$).

13. Procédé selon l'une des revendications 1 à 12, **caractérisé par le fait que**, pendant le temps de compression, le réglage de la durée d'ouverture ($t_{Li}$) et/ou de la levée d'ouverture de l'orifice d'échappement des gaz ou celle de la soupape d'échappement est déterminé par la limite de cliquetis du moteur à combustion interne, de telle sorte que, jusqu'au moment où commence la combustion détonante, la durée d'ouverture ($t_{Li}$) et/ou la levée d'ouverture augmentent peu à peu, et que la valeur maximale de la durée d'ouverture ($t_{Li}$) et/ou de la levée d'ouverture corresponde à celle qui vient d'être déterminée juste avant de commencer la combustion détonante.

14. Procédé selon l'une des revendications 1 à 13, **caractérisé par le fait que**, pour permettre le réglage d'une température constante des gaz d'échappement ($T_{Ab}$) lors du processus de régénération d'un filtre pour particules de suie qui lui est situé dans le canal d'échappement des gaz, tant la charge moteur que la température des gaz d'échappement ($T_{Ab}$) augmentent de telle sorte qu'en prolongeant la durée d'ouverture et/ou de la levée d'ouverture de l'orifice d'échappement des gaz ou celle de la soupape d'échappement de chaque cylindre, la température des gaz d'échappement ($T_{Ab}$) et la charge moteur soient également augmentées, et que, jusqu'à ce que ce processus de régénération soit fini, la durée d'ouverture ($t_{Li}$) et/ou la levée d'ouverture soient réglées en fonction de la température des gaz d'échappement ($T_{Ab}$).

**15.** Procédé selon l'une des revendications 1 à 14, **caractérisé par le fait que**, pour permettre le réglage du débit d'air du moteur à combustion interne, les signaux de commande transmis tant aux actionneurs de réglage des orifices d'échappement des gaz et/ou des soupapes d'échappement qu'aux injecteurs sont modulés au moyen d'une unité de contrôle intégrée du calculateur moteur et via une interface électronique conçue en tant qu'un bus de données CAN ou en tant qu'une interface en série par bit.

**16.** Procédé selon l'une des revendications 1 à 15, **caractérisé par le fait que** les dysfonctionnements lors du réglage du débit d'air sont détectés et saisis à l'aide d'un module diagnostic, et que les dysfonctionnements ainsi saisis seront sauvegardés dans une mémoire de données lisibles du calculateur moteur.

**17.** Procédé selon l'une des revendications 1 à 16, **caractérisé par le fait que**, pour permettre le contrôle du couple de freinage du moteur à combustion interne en régime de décélération, la durée d'ouverture ($t_{Li}$) et/ou la levée d'ouverture de la ou des soupapes d'échappement de chaque cylindre lors de l'échappement sont réglées de telle sorte que la compression des gaz de combustion soit réglée en fonction du couple de freinage, tout en réduisant la durée d'ouverture ($t_{Li}$) et/ou la levée d'ouverture des soupapes d'échappement.

**18.** Dispositif pour commander le flux d'air des moteurs à combustion interne dont l'injection de carburant est réglable en fonction de chaque cylindre et de chaque cycle opérationnel, ce dispositif étant muni d'au moins un orifice d'échappement des gaz ou d'au moins un organe de réglage d'échappement à pilotage entièrement variable, **caractérisé par le fait**

- **qu'**il est doté d'un capteur de vitesse de rotation qui saisit la vitesse de rotation du vilebrequin (n),
- **qu'**il est équipé d'un capteur de pression qui saisit la pression produite sur l'orifice d'échappement des gaz ($P_{Ab}$) et/ou sur les soupapes d'échappement de chaque cylindre, et
- **qu'**il possède un capteur qui saisit la position de la pédale d'accélérateur (*y*),
- **qu'**il y existe un calculateur moteur qui, en outre de recevoir les paramètres (n), (p) et (*y*), comprend une unité de contrôle avec des algorithmes permettant de déterminer le débit volumique d'air et qui, à partir de ces paramètres, prépare des signaux de commande qui eux permettent le réglage de la durée d'ouverture et/ou la levée d'ouverture de la ou des soupapes d'échappement de chaque cylindre.

**19.** Dispositif selon la revendication 18, **caractérisé par le fait que** les orifices d'échappement des gaz ou les organes d'échappement à pilotage sont dotés d'actionneurs, le réglage de la durée d'ouverture des orifices d'échappement des gaz ou des organes d'échappement à pilotage des cylindres étant assuré par le calculateur moteur qui, en fonction d'un signal de température ($T_{Ab}$) reçu par un capteur de température situé dans le système d'échappement des gaz, transmet un signal aux actionneurs des orifices d'échappement des gaz ou des organes d'échappement à pilotage, de telle sorte qu'il se produise une valeur différentielle entre la température de consigne et la température mesurée, que la durée d'ouverture et/ou la levée de soupape de chaque soupape d'échappement est réglée au moyen des signaux transmis par le calculateur moteur aux actionneurs des soupapes d'échappement et en fonction de cette valeur différentielle, de telle sorte que la durée d'ouverture et/ou la levée de soupape de chaque soupape d'échappement ainsi réglées varient en fonction de la valeur différentielle de la température, et que, lors du processus d'un filtre pour particules de suie, la température corresponde constamment à sa valeur de consigne.

**20.** Dispositif selon les revendications 18 et/ou 19, **caractérisé par le fait qu'**il y existe un capteur de cliquetis et où, afin de permettre le réglage du taux de compression du moteur à combustion interne pendant le temps de compression, le calculateur moteur transmet des signaux aux actionneurs des orifices d'échappement des gaz ou des organes d'échappement à pilotage de chaque cylindre, et que ce réglage du taux de compression est effectué en fonction d'un signal du capteur de cliquetis ($S_K$) transmis par le calculateur moteur.

**21.** Dispositif selon les revendications 18 à 20, **caractérisé par le fait que** la calculateur moteur est équipé d'une unité de contrôle intégrée qui comprend des éléments estimateurs permettant l'estimation approximative d'un taux de mélange carburant-air dans les conditions de fonctionnement actuelles du moteur qui elles sont déterminées par les capteurs.

**22.** Dispositif selon la revendication 21, **caractérisé par le fait que** ces éléments estimateurs sont connectés aux actionneurs et à un contrôleur de carburant, et que ces éléments estimateurs transmettent un signal de commande aux actionneurs des orifices d'échappement des gaz ou des organes d'échappement à pilotage de chaque cylindre et au contrôleur de carburant, ceci pour régler le taux de mélange carburant-air de telle sorte que celui-ci soit égal au taux de mélange carburant-air requis, avant qu'un capteur de pression ne commence à mesurer la pression dans le système d'échappement des gaz.

**23.** Dispositif selon la revendication 22, **caractérisé par le fait que** des taux d'excès d'air cartographiques et optimaux pour différentes conditions de fonctionnement du moteur sont mémorisés dans l'unité de contrôle intégrée, chacun de ces taux d'excès d'air optimaux correspondant à un groupe spécifique de conditions de fonctionnement du moteur.

**24.** Dispositif selon la revendication 18, **caractérisé par le fait que** l'orifice d'échappement des gaz constitue la soupape d'échappement de chaque cylindre, et que l'unité de commande intégrée est en mesure d'influencer, au moyen d'actionneurs, les durées d'ouverture et de fermeture et/ou les voies d'ouverture des soupapes d'échappement, de telle sorte qu'on obtienne les taux de débit d'air nécessaires à un réglage spécifique des points de fonctionnement dynamiques de la combustion.

**25.** Dispositif selon la revendication 18, **caractérisé par le fait que** le calculateur moteur détermine, à partir d'une valeur saisie par un capteur de vitesse de rotation en tant que vitesse de rotation du vilebrequin (n) mesurée sur l'orifice d'échappement des gaz et/ou sur la soupape d'échappement ($P_{Ab}$), la charge moteur de chaque cylindre, et que, pendant le temps de compression, le débit volumique d'air de combustion est réglé par des actionneurs en fonction de la durée d'ouverture et/ou de la voie d'ouverture des soupapes d'échappement.

**26.** Moteur à combustion interne qui fonctionne suivant un procédé spécifié dans l'une des revendications 1 à 17.

**27.** Moteur à combustion interne qui est doté d'un dispositif selon l'une des revendications 18 à 25.

Fig. 1

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 3720097 A1
- DE 19734227 C2
- DE 69704595 T2
- DE 19502669 C2
- DE 19928523 A1
- DE 19501150 C2
- DE 10058200 A1
- DE 19810466 C2
- DE 10111991 A1
- DE 4341945 A1
- DE 19706750 A1
- DE 69720356 T2
- DE 3940752 A1
- DE 19500501

### In der Beschreibung aufgeführte Nicht-Patentliteratur

- Untersuchung eines Verfahrens zur gesteuerten Abgasrückführung bei Ottomotoren. **PÖHLS ; AXEL.** Dissertation. VDI Verlag GmbH Düsseldorf, 2001, 1
- **WEIRICH ; MARKO.** NOx-Reduzierung mit Hilfe des SCR-Verfahrens am Ottomotor mit Direkteinspritzung. *Dissertation,* 2001, 3